# EUROPEAN PATENT SPECIFICATION

(11) **EP 3 123 448 B1**
(45) Date of publication and mention of the grant of the patent: **12.09.2018**
(21) Application number: 14717482.5
(22) Date of filing: 27.03.2014
(51) Int. Cl.: G06T 11/60

(54) **IMAGE CREATION COMBINING BASE IMAGE AND REPOSITIONED OBJECT FROM A SEQUENCE OF IMAGES**
BILDERZEUGUNG DURCH KOMBINATION AUS EINEM GRUNDBILD UND EINEM NEUPOSITIONIERTEN OBJEKT AUS EINER BILDERFOLGE
CRÉATION D'IMAGE COMBINANT UNE IMAGE DE BASE ET UN OBJET REPOSITIONNÉ À PARTIR D'UNE SÉQUENCE D'IMAGES

(43) Date of publication of application: 01.02.2017
(73) Proprietor: Sony Corporation, Tokyo 108-0075 (JP)
(72) Inventor: ARONSSON, Pär-Anders, S-21424 Malmö (SE); JONSSON, Håkan, S-21422 Malmö (SE); NORD, Lars, S-223 59 Lund (SE); THÖRN, Ola, S-216 12 Limhamn (SE)
(74) Representative: Banzer, Hans-Jörg
(86) International application number: PCT/IB2014/060235
(87) International publication number: WO 2015/145212

(56) References cited:
- DAN B. GOLDMAN ET AL: "Video object annotation, navigation, and composition", PROCEEDINGS OF THE 21ST ANNUAL ACM SYMPOSIUM ON USER INTERFACE SOFTWARE AND TECHNOLOGY, UIST '08, 1 January 2008 (2008-01-01), page 3, XP055153880, New York, New York, USA DOI: 10.1145/1449715.1449719 ISBN: 978-1-59-593975-3
- SHAH RAJVI ET AL: "Interactive Video Manipulation Using Object Trajectories and Scene Backgrounds", IEEE TRANSACTIONS ON CIRCUITS AND SYSTEMS FOR VIDEO TECHNOLOGY, IEEE SERVICE CENTER, PISCATAWAY, NJ, US, vol. 23, no. 9, 1 September 2013 (2013-09-01), pages 1565-1576, XP011525592, ISSN: 1051-8215, DOI: 10.1109/TCSVT.2013.2248972 [retrieved on 2013-08-30]
- NEAL WADHWA ET AL: "Phase-based video motion processing", ACM TRANSACTIONS ON GRAPHICS, vol. 32, no. 4, 1 July 2013 (2013-07-01), page 1, XP055154489, ISSN: 0730-0301, DOI: 10.1145/2461912.2461966

## Description

### TECHNICAL FIELD

The present disclosure relates to image creation, and more particularly to creating a new image that combines a base image from a sequence of images and a repositioned object from the sequence of images.

### BACKGROUND

Recording an optimal photograph can be a challenging task. It may be difficult to record an image at the precise moment that a group of people are looking at a camera, are smiling, and are not blinking, for example. Also, cameras have differing autofocus speeds. If a depicted scene rapidly changes, it may be too late to record a desired image once a camera has focused on the subject. Some camera devices enable users to take a rapid set of sequential photographs as a "burst," which can help with some of the problems discussed above. However, users may wish to combine aspects of multiple images. The article "Video object annotation, navigation, and composition" by DAN B. GOLDMAN ET AL., PROCEEDINGS OF THE 21 ST ANNUAL ACM SYMPOSIUM ON USER INTERFACE SOFTWARE AND TECHNOLOGY, UIST '08, pages 3-12 relates to video object based navigation and editing by a dragging metaphor, including drag-and-drop compositing of a video object.

### SUMMARY

According to one aspect of the present disclosure, a method implemented by a computing device according to claim 1 is disclosed.

In some embodiments, the method also includes receiving user input that selects an additional object from the sequence of images, performing a phase-based video motion processing algorithm to determine exaggerated movements of the additional object, and displaying the exaggerated movements of the additional object on the electronic display. Based on displaying the exaggerated movements, a selected depiction of an exaggerated movement of the additional object is received, and the selected depiction of the additional object is included in the new image.

According to another aspect of the present disclosure, a computing device according to claim 12 is disclosed.

In some embodiments, the one or more processing circuits are further configured to receive user input that selects an additional object from the sequence of images, perform a phase-based video motion processing algorithm to determine exaggerated movements of the additional object, and display the exaggerated movements of the additional object on the electronic display. In such embodiments, the one or more processing circuits are further configured to, based on displaying the exaggerated movements, receive a selected depiction of an exaggerated movement of the additional object; and include the selected depiction of the additional object in the new image.

### BRIEF DESCRIPTION OF THE DRAWINGS

Figs. 1A-F illustrate a sequence of images depicting a scene.
Fig. 2 illustrates a new image that combines aspects of two of the images of Figs. 1A-F.
Fig. 3 is a flow chart of an example method of combining aspects of multiple images from a sequence of images.
Figs. 4A-4F are a series of images that demonstrate how the method of Fig. 2 may be implemented.
Fig. 5 illustrates an additional method that includes may be used in conjunction with the method of Fig. 2, which includes performance of a phase-based video motion processing algorithm.
Figs. 6A-D are a series of images that demonstrate how the method of Fig. 6 may be implemented.
Fig. 7 illustrates a new image that is a modification of the image of Fig. 2.
Fig. 8 illustrates an example computing device operative to implement the method of Fig. 2.

### DETAILED DESCRIPTION

The present disclosure describes a method and apparatus for creating an image based on a sequence of images that depict a scene. The sequence of images may be frames of a video, for example. Images from the sequence are displayed on an electronic display (e.g., a touchscreen of a smartphone). One of the images from the sequence is selected as a base image. User input is received that selects object from the sequence of images. A movement trajectory of the selected object is determined from the sequence of images. The selected object is repositioned based on user input that drags the selected object along the determined movement trajectory from an initial position to a new position (e.g., using direct video manipulation) independent of other global movement in the pictures. A new image is created by combining the base image and the repositioned object. Optionally, a phase-based video motion processing algorithm can also be performed to determine an exaggerated movement of an object in one of the images from the sequence that may otherwise only have a subtle movement.

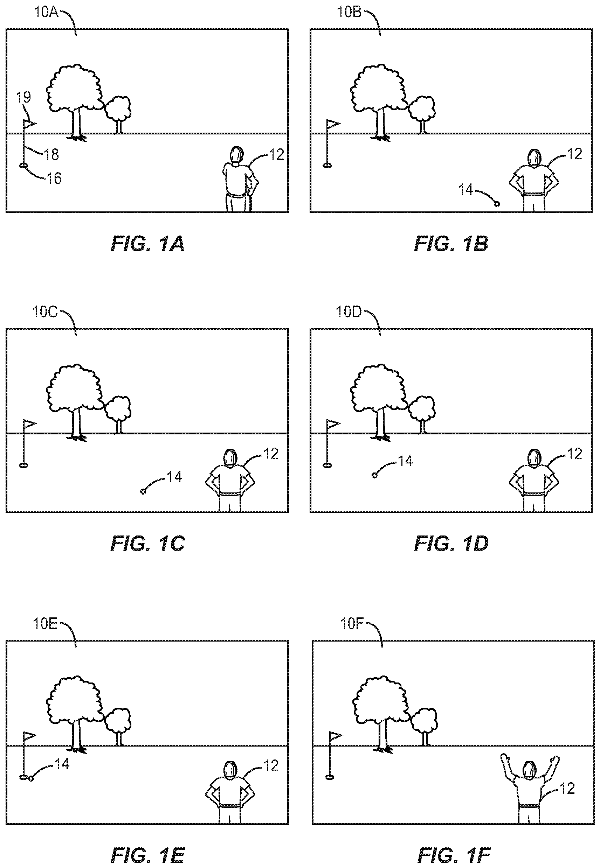

Figs. 1A-1F illustrate a sequence of images that depict a scene. These images may be recorded as frames of a video, for example. In a first image 10A, a golfer is trying to hit a golf ball into a hole 16 from which a flag pole 18 protrudes. In image 10B the golfer 12 has changed his body position to face the flag pole 18, and the golf ball 14 is moving towards the hole 16. In images 10C, 10D, and 10E, the golf ball continues to move towards the hole 16 while the golfer 12 remains in the same position. In image 10F, the golf ball 14 has entered the hole 16 and is no longer visible, and the golfer 12 is in a celebratory position.

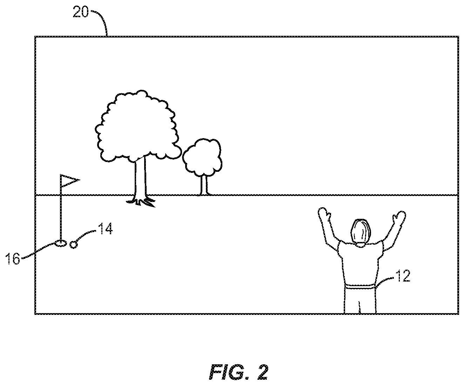

A user may wish to combine various aspects of the images 10A-F. For example, the user may wish to depict the golfer 12 in the celebratory position of 10F, but while the golf ball 14 is still visible. To accomplish this, the user could select image 10F as a base image. The user could then select the golf ball 14 from a previous image (e.g., image 10C), drag the golf ball along its trajectory to a desired position (e.g., its depiction close to the hole 16 in Fig. 10E), to create a new image 20 which combines the golfer 12 in the celebratory position and the golf ball 14 in the location close to the hole 16 (see image 20 of Fig. 2).

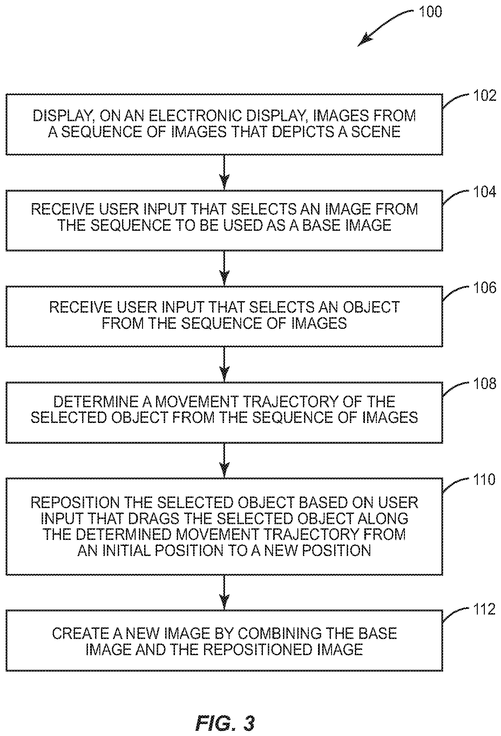

Fig. 3 is a flow chart of an example method 100 of combining aspects of multiple images that could be used to create the image 20 of Fig. 2. On an electronic display, images from a sequence of images that depicts a scene are displayed (block 102). User input is received that selects an image from the sequence of images to be used as a base image (block 104). User input is also received that selects an object from the sequence of images (block 106). A movement trajectory of the selected object is determined from the sequence of images (block 108). The selected object is repositioned based on user input that drags the selected object along the determined movement trajectory from an initial position to a new position (block 110). A new image is created by combining the base image and the repositioned object (block 112).

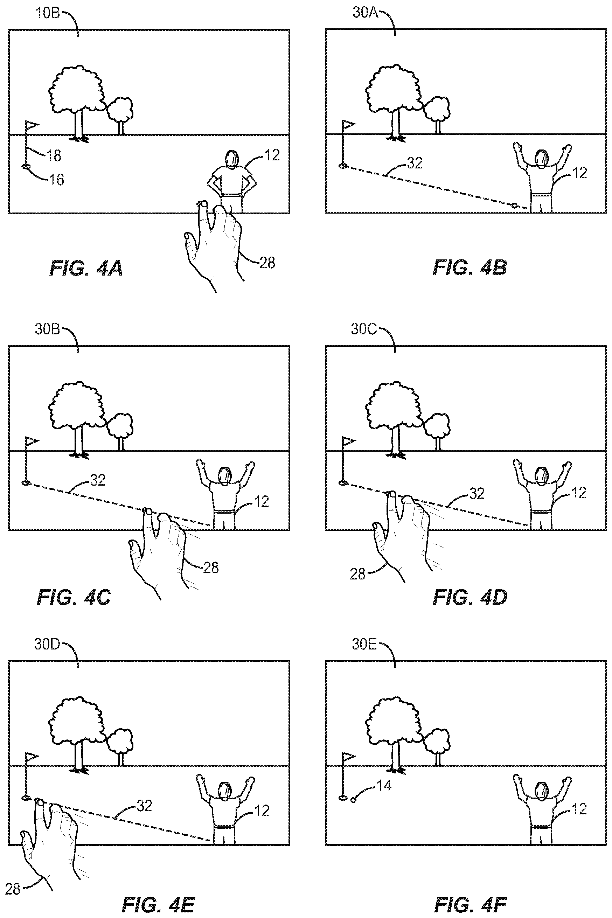

The method 100 of Fig. 3 will now be discussed in connection with the example of Figs. 1A-1F and Figs. 4A-F. Images from the sequence are displayed (block 102), which facilitates a user providing input that selects an image from the sequence to be used as a base image (block 104). For this discussion, assume that image 10F is selected as the base image due to the golfer 12 being in the celebratory position. User input is also received that selects the golf ball 14 from the sequence of images as the selected object (block 106). A movement trajectory of the golf ball 14 is determined from the sequence of images 10A-F (block 108).

Referring to image 10F (in Fig. 1F), the golf ball 14 is not shown, because it is already in the hole 16. Therefore, to select the golf ball, a user changes to another of the plurality of images, such as image 10B (shown in Figs. 1B and 4A). The user select the golf ball by performing an appropriate touch gesture on an electronic display (e.g., double tap, tap-and-hold, etc.). The selected object is then displayed on the base image, as shown in image 30A in Fig. 4B, where the golfer 12 in the celebratory position is shown along with golf ball 14. An indication of the movement trajectory 32 of the golf ball 14 is then shown to assist the user with selecting a desired location of the golf ball 14 along that trajectory.

The user drags the golf ball along the trajectory 32 from an initial position to a new position, as shown in Figs 4C, 4D, and 4E. As the user drags the golf ball 14, a repositioned version of the golf ball is displayed (block 110). Having arrived at a desired location for the object (see image 30D in Fig. 4E) the user can release their finger from the touchscreen.

As shown in Fig. 4E, the new position for the golf ball 14 repositions the golf ball 14 to a location that is in close proximity to hole 16. The computing device implementing method 100 creates a new image by combining the base image and the repositioned golf ball (block 112). The new image 30E is shown in Fig. 4F. As shown in Fig. 4F, the new image shows the golf ball 14 in close proximity to hole 16 while the golfer 12 is in the celebratory position. In this example, the new image 30E combines aspects of images 10F and 10E.

As discussed above, in one or more embodiments, an indication of the entire trajectory 32 of the selected object is displayed while the selected object is at a given point on the trajectory and the user input that drags the object is being received. This indication is a dotted line in the example of Figs. 4B-E. Such an indication can be useful to the user in visualizing the trajectory as they are providing a desired position for the selected object. In one or more embodiments, a user is allowed to deviate from the trajectory slightly, but the new location for the selected object is rejected if the new location deviates from the movement trajectory by more than a predefined deviation threshold (e.g., a quantity of pixels). If rejected, the user may be presented with another opportunity to select a position for the selected object along the movement trajectory 32. One reason for implementing the deviation threshold is that a user may desire to deviate to some degree from the movement trajectory, and the deviation threshold permits this to some degree but prevents completely moving the selected object off the determined trajectory 32, as such movement could create problems with light and shadows and could yield an unrealistic rendering of the scene depicted in the sequence of images.

In some embodiments, the deviation threshold is a static predetermined value. In some embodiments, the deviation threshold is determined dynamically based on the movement trajectory (e.g., more or less deviation being permitted depending on a length of the movement trajectory). In some embodiments, the deviation threshold is determined dynamically based on the scene being depicted. In such embodiments, more deviation may be permitted for more homogeneous backgrounds for which it is easier to fill "holes" in the base image that may result from repositioning the selected object, and less deviation is permitted for less homogenous backgrounds for which it is more difficult to realistically fill such "holes." An example homogeneous background could include grass that is lit uniformly.

In some embodiments, the repositioned object includes not only a different location for the selected object, but also a different orientation. For example, if the object moving rotates during its movement along the movement trajectory 32 it may be desirable for the repositioned object to also show that rotated orientation. Consider, for example, that as a non-circular object was being thrown, that such an object would very likely rotate before landing. In examples such as this, the modified version of the selected object could also include a different orientation for the selected object. In some embodiments, the user could freeze the rotation of the selected object as it was dragged along the movement trajectory 32. In some embodiments, the object would rotate as it was dragged along the movement trajectory 32.

Thus, in one or more embodiments, repositioning the selected object includes determining a new location for the selected object, a new orientation for the selected object, or both. Additionally, in one or more embodiments a size of the selected object may be varied while the selected object is being dragged along the determined movement trajectory (e.g., as the object gets closer or further away). In some embodiments, repositioning the object includes repositioning a shadow of the selected object, such that a shadow of the object in the new position is shown in proximity to the new position instead of remaining in proximity to the initial position. In one or more embodiments, in addition to repositioning the shadow, other shadow adjustments are performed. Some example additional shadow adjustments include any combination of changes in shadow scale, luminance, shape, angle, and/or color. Such shadow adjustments may be performed based on a number of factors, such as the new position of the selected object, a size of the selected object when repositioned to the new position, and/or shadows of other items in proximity to the new position of the selected object.

In some embodiments in which a shadow of the selected object is also repositioned, the sequence of images may be recorded in 3D using, e.g., a stereoscopic camera, and movement of the shadow is analyzed using 3D data from the 3D sequence of images. For example, the individual component images that make up a given stereoscopic image may be analyzed to determine a degree to which a shadow moves along with the selected object along its movement trajectory.

In some embodiments, multiple copies of the selected object at different positions along the movement trajectory 32 could be included in a final new image. For example, the new image 20 of Fig. 2 could be further modified to add extra copies of the golf ball 14 at a different location along the movement trajectory 32. This could be accomplished by repeating the method 100, with the "new image" of block 112 of a previous iteration of the method 100 serving as the base image in a subsequent iteration of the method 100. The method 100 could be repeated a desired number of times so that a desired quantity of the selected object was included in the final new image.

In such embodiments, the selected object could be duplicated, and optionally also scaled, in the final image. For example, consider a video of a skier doing flips off of a downhill ski jump until the skier reaches a landing position. Using the techniques discussed above, multiple copies of the skier at various positions along their movement trajectory could be included in the final image. This could be performed to yield an image similar to what a multiple exposure image may resemble (e.g., multiple exposures of the skier at various positions along the motion trajectory recorded from a single camera location).

As shown in Figs. 4B-E, aspects of the base image may be shown while the selected object is being dragged moved along the movement trajectory 32. To accomplish this, image areas that are not occupied by the selected object in any of the images of the sequence are identified, and those identified image areas of the base image are displayed as the selected object is being dragged along the movement trajectory. In the example of Figs. 4B-E, the selected object is a golf ball 14, which is quite small, so the identified image areas that are not occupied by the selected object includes the majority of images 30A-D.

In the example discussed above, the selected object was not present in the base image. However, if the selected object was present in the base image (e.g., if the golf ball 14 was shown in image 10F), then combining the base image and the modified version of the selected object includes determining pixels in the base image that are no longer occupied when the selected object is repositioned to the new position (i.e., "holes" in the base image). The determined pixels of the base image are then filled in based on an image area surrounding the determined pixels (e.g., using nearest neighbor, cloning, and/or content aware fill,). Alternatively, or in addition to this, the determined pixels could be filled based on one or more of the images from the sequence other than the base image (e.g., by copying pixels from the other images in the sequence).

In some embodiments, for facilitating the user input that drags the selected object along its movement trajectory, interpolation is performed. In such embodiments, performance of the interpolation may be triggered by a movement of the selected object between a first position in a first one of the sequence of images and a second position in a consecutive second one of the sequence of images exceeding a difference threshold. If that occurs, interpolation is performed to determine an additional position for the selected object along the movement trajectory that is between the first and second positions; and the selected object is displayed at the additional position while the selected object is being dragged along the determined movement trajectory between the first and second positions. This could provide for greater control over the movement of a selected object if the object is moving quickly and/or if the sequence of images was not recorded quickly enough to capture a desired amount of images of the selected object in motion.

Using Figs. 1D and 1E as an example, the golf ball 14 moves a considerable distance between these images. Performing interpolation could enable a user to place the golf ball at one or more locations along the movement trajectory 32 that are situated between those shown in Figs. 1D-E. Thus, as a user drags the selected object back and forth on the base image, they could be provided with finer control of the object than may otherwise be possible without performing interpolation. In one or more embodiments, if the sequence of images is a video, the performance of interpolation involves generating additional frames of the video. In one or more embodiments, if the sequence of images is a sequence of still photographs, the performance of interpolation involves generating additional still photographs. In other embodiments, interpolation is performed to generate not entire frames and/or photographs, but only image areas along the motion trajectory 32 of the selected object.

In one or more embodiments, the sequence of images is recorded by the same device that performs the method 100. In some such embodiments, the recording is performed based on a user actuation of a camera shutter. Such a user actuation could comprise a user depressing an actual shutter button, or could comprise a user selecting a shutter user interface element on a touchscreen, for example. In one or more embodiments, the plurality of images are recorded as frames of a video (e.g., a standard definition, high definition, or 4K video). In other embodiments, they are obtained as a series of still photos (e.g., as a photo burst). In one or more embodiments, the recording of the plurality of images starts before the shutter is actually actuated (e.g., after a camera smartphone application has been opened, and focusing has occurred) and completes after the shutter is actuated. Of course, it is understood that these are non-limiting examples, and that computing device that performs the method 100 could instead obtain the images as still images or video frames from a different device (e.g., a laptop computing device could obtain the images from a digital camera or video camera).

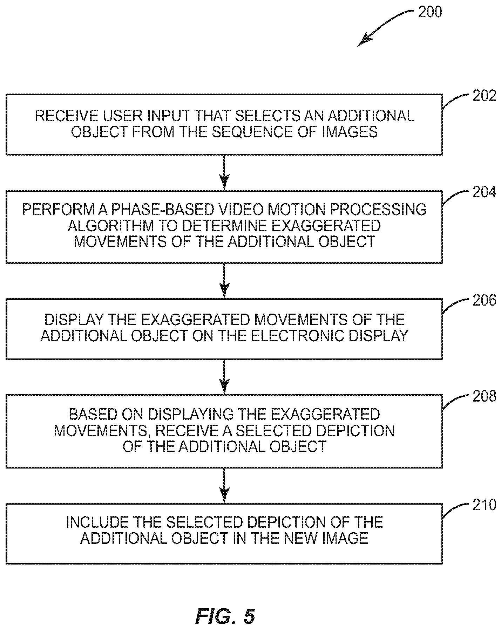

Referring again to Fig. 3, the user input that selects an image (block 104) may correspond to a user dragging forwards and/or backwards through the plurality of images until a base image is selected. Such a user input could comprise a cursor movement, or a detected finger motion on a touch-based input device (e.g., a touchscreen, or touchpad), for example. The user input that selects an object from the sequence of images (block 106) could similarly comprise a detected finger touch on a touch-based input. For example, this could include a detected finger double tap or tap-and-hold on a touchscreen or touchpad (see, e.g., Fig. 5A indicating the outline of a hand 28 providing such a selection). Alternatively, the user input of block 106 could comprise a similar input from a cursor (e.g., controlled by a stylus, mouse, touchpad, etc.).

The computing device performing method 100 determines a boundary of the selected object in order to determine the movement trajectory. This may be performed using edge detection, for example. In the example of Fig. 4A, this includes determining a boundary of the golf ball 14.

Optionally, additional adjustments may be performed. This may include relocating additional objects in the new image (e.g., if multiple images have a movement trajectory in the plurality of images). In one example, the additional adjustments include performance of a phase-based video processing algorithm, as shown in Fig. 5.

Fig. 5 illustrates an example method 200 that may be performed in conjunction with the method 100 to perform additional adjustments, and involves performance of a phase-based video motion processing algorithm. User input is received that selects an additional object from the sequence of images (block 202). A phase-based video motion processing algorithm is performed to determine exaggerated movements of the additional object (block 204). On an electronic display, the exaggerated movements of the selected additional object are displayed (block 206). Based on displaying the exaggerated movements, additional user input is received that includes a selected depiction of the additional object is received (block 208), and the selected depiction of the additional object is included in the new image (block 210).

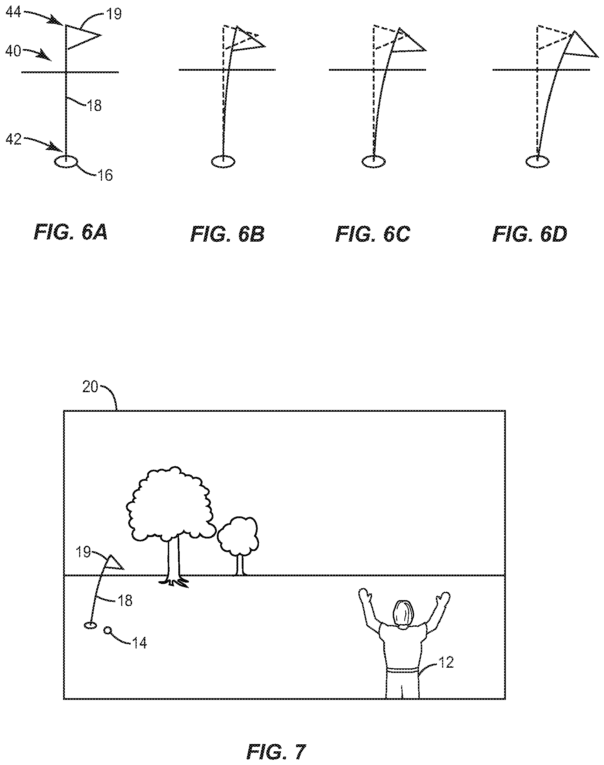

The method 200 will now be discussed in connection with Figs. 6A-D. The discussion below assumes that the additional object which is selected is the combination of flag pole 18 and flag 19 - collectively referred to as flag assembly 40. In the depicted scene shown in Figs. 1A-F, a first end 42 of the flag pole 18 is secured in hole 16, and an opposite second end 44 of the flag pole 18 is secured to a flag 19. Throughout the depicted scene, the flag 19 is blowing slightly, but not enough to induce any perceptible flexing in the flag pole 18. Nevertheless, the flag pole 18 may still be exhibiting some degree of flexing and/or vibration. Performance of a phase-based video motion processing algorithm can detect and realistically exaggerate subtle movements such as a vibration in the flag pole 18.

For the object selection of block 202 and/or for the object selection of block 106, the computing device receiving the object selection may perform edge detection to determine the extent of the object selected. If the object appears to include multiple elements (e.g., flag pole 18 and flat 19 of flag assembly 40), the computing device may ask for confirmation that the user intended to select each of the multiple pieces. If confirmation is not received, other combinations of elements (or a single element) may be suggested to the user based on their selection.

According to the method 200, a phase-based video motion processing algorithm is performed (e.g., as discussed at http://people.csail.mit.edu/nwadhwa/phase-video) to determine exaggerated movements of the additional object (block 204), which in this case is the flag assembly 40. Because those of ordinary skill in the art would understand how to perform a phase-based video motion processing algorithm to obtain exaggerated movements of an object, performance of the algorithm is not discussed in detail herein.

On the electronic display, the exaggerated movements of the selected additional object are displayed (block 206). Some example exaggerated movements are shown in Figs. 6B-D, where a dotted outline shows an un-exaggerated position of the flag pole assembly 40. Figs. 6B-D show increasingly exaggerated movements of the flag assembly 40, with Fig. 6D showing a maximum depicted exaggerated position. Based on displaying the exaggerated movements, a user input including a selected depiction of the additional object is received (block 208). The selected depiction of the additional object is included in the new image (block 210). Assuming that the selected depiction is that of Fig. 6D, Fig. 7 shows a modified new image 20', which is the image 20 of Fig. 2 but modified to include the selected depiction of the flag assembly 40.

In the example of Figs. 6A-D, the additional selected object (flag assembly 40) was present in the base image, but is altered in the modified new image 20', which may create "holes" in the image because there may be pixels that are no longer occupied when the desired depiction of the additional selected object is shown. To address this, such pixels are determined, and are filled based on an image area surrounding the determined pixels, based on one or more of the plurality of images other than the image from which the additional object was selected, or both. As discussed above, some techniques that could be used in the filling may include nearest neighbor, cloning, and/or content aware fill, for example. Alternatively, or in addition to this, pixels could simply be copied from other ones of the plurality of images.

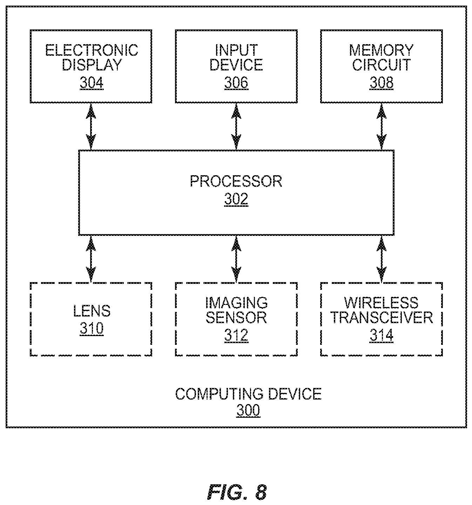

Fig. 8 illustrates an example computing device 300 operative to implement the techniques discussed herein. The computing device may be a smartphone, personal digital assistant (PDA), or tablet computing device, for example. Of course, other types of computing devices could also be used, such as laptops, desktop computers, and the like. In some embodiments, the computing device 300 is a digital camera, video camera, or some other imaging device.

The computing device 300 includes a processor 302 and electronic display 304. The processor 302 comprises one or more processor circuits, including, for example, one or more microprocessors, microcontrollers, or the like, and is also configured with appropriate software and/or firmware to carry out one or more of the techniques discussed above. The electronic display may be integrated in, or external to the computing device 300, for example. The processor 302 is configured to display, on the electronic display, images from a sequence of images that depicts a scene. The processor 302 is further configured to receive user input that selects an image from the sequence to be used as a base image, to receive user input that selects an object from the sequence of images, and to determine a movement trajectory of the selected object from the sequence of images. The processor 302 is further configured to reposition the selected object based on user input that drags the selected object along the determined movement trajectory from an initial position to a new position; and create a new image by combining the base image and the repositioned object.

The computing device 300 also includes an input device 306 and a memory circuit 308. In some embodiments, the input device 306 includes one or more touch sensors that work in conjunction with electronic display 304 to provide a touchscreen interface. Of course, other touch-based input devices could be used, such as a touchpad. In one example, the input device is a communication interface that receives input from an external device (e.g., a wireless mouse, or wired mouse). The input device 306 can be used to receive the user input that indicates the image selection and/or the user input that selects and drags the object along its movement trajectory.

Memory circuit 308 is a non-transitory computer readable medium operative to store a sequence of images (e.g., the images shown in Figs. 1A-F). In one or more embodiments, the non-transitory computer-readable medium may comprise any computer-readable media, with the sole exception being a transitory, propagating signal. In one or more embodiments, the memory circuit 308 includes one or more of an electronic, magnetic, optical, electromagnetic, or semiconductor-based storage system.

Optionally, the computing device 300 may also include a lens 310 and imaging sensor 312 configured to record a sequence of images (e.g., those of Figs. 1A-F). The computing device 300 may also include a wireless transceiver 314 to send and/or receive images. These optional components are shown in dotted lines to indicate that they are not required.

The computing device 300 may be configured to implement any combination of the techniques described above. Thus, in one or more embodiments, the processor 302 is configured to reject the new position for the selected object if the new position deviates from the movement trajectory by more than a predefined deviation threshold. In the same or another embodiment, the processor 302 is configured to display an indication of the entire trajectory of the selected object while the selected object is at a given point on the trajectory and the user input that drags the object is being received. In the same or another embodiment, the processor 302 is configured to perform interpolation as discussed above.

In one or more embodiments, the computing device 300 is also operative to perform the method 200 of Fig. 5. In such embodiments, the processor 302 is configured to receive user input that selects an additional object from the sequence of images; perform a phase-based video motion processing algorithm to determine exaggerated movements of the additional object; and display, on electronic display 304, the exaggerated movements of the additional object. The processor 302 is further configured to, based on displaying the exaggerated movements, receive a selected depiction of the additional object; and include the selected depiction of the additional object in the new image.

Optionally, a computer program product may be stored in the memory circuit 308, which comprises computer program code which, when run on the computing device 300, configures the computing device 300 to perform any of the techniques discussed above.

In the prior art, photo manipulation has often been a complex task reserved for photography and graphic design professionals. Tools such as ADOBE PHOTOSHOP have complex user interfaces that permit free-form editing typically based on a single image. More recently, software such as REWIND from SCALADO has enabled a user to combine facial expressions from multiple photographs into a single image. However, none of these tools determine a movement trajectory of a selected object from a sequence of objects, and reposition a selected object based on user input that drags the selected object along the determined movement trajectory from an initial position to a new position. Moreover, such tools do not include performance of phase-based video motion processing algorithm to determine exaggerated movements of a selected object. Nor are the interpolation techniques described above included in such prior art tools.

Use of direct video manipulation via the dragging of the selected object along its determined movement trajectory can provide an advantageous user interface that works well with touch screen computing devices (for which interface elements may be limited). Also, use of the deviation threshold discussed above can be used to avoid unrealistic looking photo manipulations.
The present disclosure may, of course, be carried out in other ways than those specifically set forth herein without departing from essential characteristics of the present disclosure. For example, it should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. Thus, the present embodiments are to be considered in all respects as illustrative and not restrictive, and all changes coming within the meaning and equivalency range of the appended claims are intended to be embraced therein.

## Claims

1. A method (100) implemented by a computing device (300), comprising:
displaying (102), on an electronic display (304), images (10A-10F) from a sequence of images that depicts a scene;
receiving user input (104) that selects an image (10A-10F) from the sequence to be used as a base image (10F);
receiving user input (106) that selects an object (14) from the sequence of images (10A-10F);
determining (108) a movement trajectory (32) of the selected object (14) from the sequence of images (10A-10F);
first repositioning (110a) the selected object (14) based on user input that drags the selected object (14) along the determined movement trajectory (32) from an initial position to a new first position;
**characterized by**
second repositioning (110b) the selected object (14) based on user input that drags the selected object (14) along the determined movement trajectory (32) from an initial position to a new second position; and
creating (112) a new image (20) by combining the base image (10F), the first repositioned object (14) and the second repositioned object (14).

2. The method (100) of claim 1, further **characterized by**:
rejecting the new position for the selected object (14) if the new position deviates from the movement trajectory (32) by more than a predefined deviation threshold.

3. The method (100) of any one of claims 1-2, further **characterized by**:
varying a size of the selected object while the selected object is being dragged along the determined movement trajectory.

4. The method (100) of any one of claims 1-3, further **characterized by**:
if a movement of the selected object (14) between a first position in a first one of the sequence of images (10A-10F) and a second position in a consecutive second one of the sequence of images (10A-10F) exceeds a difference threshold:
performing interpolation to determine an additional position for the selected object (14) along the movement trajectory (32) that is between the first and second positions; and
displaying the selected object (14) at the additional position while the selected object (14) is being dragged along the determined movement trajectory (32) between the first and second positions.

5. The method (100) of any one of claims 1-4, further **characterized by**:
displaying an indication of the entire trajectory of the selected object (14) while the selected object (14) is at a given point on the trajectory and the user input that drags the object (14) is being received.

6. The method (100) of any one of claims 1-5, further **characterized by**:
identifying image areas that are not occupied by the selected object (14) in any of the images in the sequence; and
displaying the identified image areas of the base image (10F) as the selected object (14) is being dragged along the movement trajectory (32).

7. The method (100) of any one of claims 1-6, wherein creating a new image (20) by combining the base image (10F) and the first and second repositioned objects (14) is **characterized by**:
determining pixels in the base image (10F) that are no longer occupied when the selected object (14) is repositioned to the new first or second position; and
filling in the determined pixels of the base image (10F) based on an image area surrounding the determined pixels, based on one or more of the images (10A-10F) from the sequence other than the base image (10F), or both.

8. The method (100) of any one of claims 1-7, further **characterized by** recording the sequence of images (10A-10F) based on user actuation of a camera shutter.

9. The method (100) of any one of claims 1-8, wherein the sequence of images (10A-10F) are frames of a video, and wherein additional frames of the video are generated by means of an interpolation technique.

10. The method (100) of any one of claims 1-8, wherein the sequence of images (10A-10F) refers to a sequence of still photographs, and wherein additional sequential images are generated by means of an interpolation technique.

11. The method (100, 200) of any one of claims 1-9, further **characterized by**:
receiving user input (202) that selects an additional object (14) from the sequence of images (10A-10F);
performing (204) a phase-based video motion processing algorithm to determine exaggerated movements of the additional object (40);
displaying the exaggerated movements of the additional object (40) on the electronic display (304);
based on displaying the exaggerated movements, receiving a selected depiction of an exaggerated movement of the additional object (40); and
including the selected depiction of the additional object (40) in the new image (20').

12. A computing device (300), comprising:
an electronic display (304); and
one or more processing circuits (302) configured to:
display, on the electronic display (304), images from a sequence of images (10A-10F) that depicts a scene;
receive user input that selects an image (10A-10F) from the sequence (10A-10F) to be used as a base image (10F);
receive user input that selects an object (14) from the sequence of images (10A-10F);
determine a movement trajectory (32) of the selected object (14) from the sequence of images (10A-10F); and
first reposition the selected object (14) based on user input that drags the selected object (14) along the determined movement trajectory (32) from an initial position to a new first position; **characterized in that**
the one or more processing circuits (302) are further configured to:
second reposition the selected object (14) based on user input that drags the selected object (14) along the determined movement trajectory (32) from an initial position to a new second position; and
create a new image (20) by combining the base image (10F), the first repositioned object (14) and the second repositioned object (14).

13. The computing device (300) of claim 12, wherein the one or more processing circuits (302) are further configured to:
reject the new position for the selected object (14) if the new position deviates from the movement trajectory (32) by more than a predefined deviation threshold, and
vary a size of the selected object (14) while the selected object (14) is being dragged along the determined movement trajectory (32).

14. The computing device (300) of any one of claims 12-13, wherein the one or more processing circuits (302) are further configured to:
if a movement of the selected object (14) between a first position in a first one of the sequence of images (10A-10F) and a second position in a consecutive second one of the sequence of images (10A-10F) exceeds a difference threshold:
perform interpolation to determine an additional position for the selected object (14) along the movement trajectory (32) that is between the first and second positions; and
display the selected object (14) at the additional position while the selected object (14) is being dragged along the determined movement trajectory (32) between the first and second positions.

15. The computing device (300) of any one of claims 12-14, wherein the one or more processing circuits (302) are further configured to:
display an indication of the entire trajectory of the selected object (14) while the selected object (14) is at a given point on the trajectory and the user input that drags the object (14) is being received.

## Patentansprüche

1. Verfahren (100), welches durch eine Computervorrichtung (300) ausgeführt wird, aufweisend:
Anzeigen (102) von Bildern (10A-10F) aus einer Abfolge an Bildern, die einen Vorgang darstellt, auf einer elektronischen Anzeige (304);
Empfangen einer Benutzereingabe (104), die ein Bild (10A-10F) aus der Abfolge auswählt, welches als ein Basisbild (10F) zu verwenden ist;
Empfangen einer Benutzereingabe (106), die ein Objekt (14) aus der Abfolge an Bildern (10A-10F) auswählt;
Bestimmen (108) einer Bewegungstrajektorie (32) des ausgewählten Objekts (14) aus der Abfolge an Bildern (10A-10F);
Erstes Neupositionieren (110a) des ausgewählten Objekts (14) basierend auf der Benutzereingabe, die das ausgewählte Objekt (14) entlang der bestimmten Bewegungstrajektorie (32) von einer Anfangsposition zu einer neuen ersten Position zieht;
**gekennzeichnet durch**
Zweites Neupositionieren (110B) des ausgewählten Objekts (14) basierend auf der Benutzereingabe, die das ausgewählte Objekt (14) entlang der bestimmten Bewegungstrajektorie (32) von einer Anfangsposition zu einer neuen zweiten Position zieht; und
Erstellen (112) eines neuen Bildes (20) durch Kombinieren des Grundbilds (10F) mit dem ersten neupositionierten Objekt (14) und dem zweiten neupositionierten Objekt (14).

2. Verfahren nach Anspruch 1, ferner **gekennzeichnet durch**:
Ablehnen der neuen Position für das ausgewählte Objekt (14), falls die neue Position von der Bewegungstrajektorie (32) mehr als einen vorbestimmten Schwellwert abweicht.

3. Verfahren (100) nach einem der Ansprüche 1-2, ferner **gekennzeichnet durch**:
Variieren einer Größe des ausgewählten Objekts, während das ausgewählte Objekt entlang der bestimmten Bewegungstrajektorie gezogen wird.

4. Verfahren nach einem der Ansprüche 1-3, ferner **gekennzeichnet durch**:
falls eine Bewegung des ausgewählten Objekts (14) zwischen einer ersten Position in einer ersten Abfolge von Bildern (10A-10F) und einer zweiten Position einer nachfolgenden zweiten Abfolge von Bildern (10A-10F) einen Unterschiedsschwellwert übersteigt:
Durchführen einer Interpolation, um eine zusätzliche Position für das ausgewählte Objekt (14) entlang der Bewegungstrajektorie (32), die sich zwischen der ersten und der zweiten Position befindet, zu bestimmen; und
Anzeigen des ausgewählten Objekts (14) an der zusätzlichen Position, während das ausgewählte Objekt (14) entlang der bestimmten Bewegungstrajektorie (32) zwischen der ersten und zweiten Position gezogen wird.

5. Verfahren (100) nach einem der Ansprüche 1-4, ferner **gekennzeichnet durch**:
Anzeigen einer Indikation der gesamten Trajektorie des ausgewählten Objekts (14), während sich das ausgewählte Objekt (14) an einem vorgegebenen Punkt an der Trajektorie befindet und die Benutzereingabe, die das Objekt (14) zieht, empfangen wird.

6. Verfahren (100) nach einem der Ansprüche 1-5, ferner **gekennzeichnet durch**:
Identifizieren von Bildbereichen, die nicht durch das ausgewählte Objekt (14) in irgendeinem der Bilder der Abfolge belegt sind; und
Anzeigen der identifizierten Bildbereiche des Basisbildes (10F), während das ausgewählte Objekt (14) entlang der Bewegungstrajektorie (32) gezogen wird.

7. Verfahren (100) nach einem der Ansprüche 1-6, wobei das Erstellen eines neuen Bildes (20) durch Kombinieren des Basisbildes (10F) und des ersten und zweiten neupositionierten Objekts (14) **gekennzeichnet ist durch**:
Bestimmen von Pixeln in dem Basisbild (10F), die nicht mehr belegt sind, sobald das ausgewählte Objekt (14) zu der neuen ersten oder zweiten Position neupositioniert wird; und
Füllen der bestimmten Pixel des Basisbildes (10F) basierend auf einem Bildbereich, welcher die bestimmten Pixel umgibt, basierend auf einem oder mehreren Bildern (10A-10F) aus der Abfolge, oder basierend auf beidem.

8. Verfahren (100) nach einem der Ansprüche 1-7, ferner **gekennzeichnet durch** Aufzeichnen der Abfolge an Bildern (10A-10 F) basierend auf einer Benutzerbetätigung einer Kamerablende.

9. Verfahren (100) nach einem der Ansprüche 1-8, wobei die Abfolge an Bildern (10A-10F) Einzelbilder eines Videos sind, und wobei zusätzliche Einzelbilder des Videos mittels einer Interpolationstechnik erzeugt werden.

10. Verfahren (100) nach einem der Ansprüche 1-8, wobei sich die Abfolge an Bildern (10A-10F) auf eine Abfolge unbewegter Fotos bezieht, und wobei zusätzliche Abfolgebilder mittels einer Interpolationstechnik erzeugt werden.

11. Verfahren (100,200) nach einem der Ansprüche 1-9, ferner **gekennzeichnet durch**:
Empfangen einer Benutzereingabe (202), die ein zusätzliches Objekt (14) aus der Abfolge an Bildern (10A-10F) auswählt;
Durchführen (204) eines phasenbasierten Videobewegungs-Verarbeitungsalgorithmus, um übertriebene Bewegungen des zusätzlichen Objekts (40) zu bestimmen;
Anzeigen der übertriebenen Bewegungen des zusätzlichen Objekts (40) auf der elektronischen Anzeige (304);
basierend auf dem Anzeigen der übertriebenen Bewegungen, Empfangen einer ausgewählten Darstellung einer übertriebenen Bewegung des zusätzlichen Objekts (40); und
Einfügen der ausgewählten Darstellung des zusätzlichen Objekts (40) in dem neuen Bild (20').

12. Computervorrichtung (300), aufweisend:
eine elektronische Anzeige (304); und
eine oder mehrere Verarbeitungsschaltkreise (302), welche ausgestaltet sind zum:
Anzeigen von Bildern einer Sequenz an Bildern (10A-10F), die einen Vorgang darstellen, auf der elektronischen Anzeige (304);
Empfangen einer Benutzereingabe, die ein Bild (10A-10F) von der Abfolge (10A-10F) auswählt, welche als Basisbild (10F) zu verwenden ist;
Empfangen einer Benutzereingabe, die ein Objekt (14) aus der Abfolge an Bildern (10A-10 F) auswählt;
Bestimmen einer Bewegungstrajektorie (32) des ausgewählten Objekts (14) von der Abfolge an Bildern (10A-10F); und
Erstes Neupositionieren des ausgewählten Objekts (14) basierend auf der Benutzereingabe, die das ausgewählte Objekt (14) entlang der bestimmten Bewegungstrajektorie (32) von einer Anfangsposition zu einer neuen ersten Position zieht; **dadurch gekennzeichnet, dass**
der eine oder die mehreren Verarbeitungsschaltkreise (302) ferner ausgestaltet sind für ein:
Zweites Neupositionieren des ausgewählten Objekts (14) basierend auf der Benutzereingabe, die das ausgewählte Objekt (14) entlang der bestimmten Bewegungstrajektorie (32) von einer Anfangsposition zu einer neuen zweiten Position zieht; und
Erstellen eines neuen Bildes (20) durch Kombinieren des Basisbildes (10F) mit dem ersten neupositionierten Objekt (14) und dem zweiten neupositionierten Objekt (14).

13. Computervorrichtung (300) nach Anspruch 12, wobei der eine oder die mehreren Verarbeitungsschaltkreise (302) ferner dazu ausgestaltet sind zum:
Ablehnen der neuen Position für das ausgewählte Objekt (14), falls die neue Position von der Bewegungstrajektorie (32) durch mehr als einen vorbestimmten Abweichungsschwellwert abweicht, und
Variieren einer Größe des ausgewählten Objekts (14), während das ausgewählte Objekt (14) entlang der bestimmten Bewegungstrajektorie (32) gezogen wird.

14. Computervorrichtung (300) nach einem der Ansprüche 12-13, wobei der eine oder die mehreren Verarbeitungsschaltkreise (302) ferner dazu ausgestaltet sind, um:
falls eine Bewegung des bestimmten Objekts (14) zwischen einer ersten Position einer ersten Sequenz an Bildern (10A-10F) und einer zweiten Position in einer nachfolgenden zweiten Sequenz an Bildern (10A-10 F) einen Schwellwertunterschied überschreitet:
Durchführen einer Interpolation, um eine zusätzliche Position für das ausgewählte Objekt (14) entlang der Bewegungstrajektorie (32), die sich zwischen der ersten und der zweiten Position befindet, zu bestimmen; und
Anzeigen des ausgewählten Objekts (14) bei der zusätzlichen Position, während das ausgewählte Objekt (14) entlang der bestimmten Bewegungstrajektorie (32) zwischen der ersten und der zweiten Position gezogen wird.

15. Computervorrichtung (300) nach einem der Ansprüche 12-14, wobei der eine oder die mehreren Verarbeitungsschaltkreise (302) ferner ausgestaltet sind zum:
Anzeigen einer Indikation der gesamten Trajektorie des ausgewählten Objekts (14), während sich das ausgewählte Objekt (14) an einem vorgegebenen Punkt der Trajektorie befindet und die Benutzereingabe, die das Objekt (14) zieht, empfangen wird.

## Revendications

1. Procédé (100) mis en oeuvre par un dispositif informatique (300), comprenant :
l'affichage (102), sur un dispositif d'affichage électronique (304), d'images (10A-10F) depuis une séquence d'images qui dépeint une scène ;
la réception d'une entrée d'utilisateur (104) qui sélectionne une image (10A-10F) depuis la séquence devant être utilisée en tant qu'image de base (10F) ;
la réception d'une entrée d'utilisateur (106) qui sélectionne un objet (14) depuis la séquence d'images (10A-10F) ;
la détermination (108) d'une trajectoire de mouvement (32) de l'objet (14) sélectionné depuis la séquence d'images (10A-10F) ;
un premier repositionnement (110a) de l'objet (14) sélectionné sur la base d'une entrée d'utilisateur qui fait glisser l'objet (14) sélectionné le long de la trajectoire de mouvement (32) déterminée depuis une position initiale vers une nouvelle première position ;
**caractérisé par**
un second repositionnement (110b) de l'objet (14) sélectionné sur la base d'une entrée d'utilisateur qui fait glisser l'objet (14) sélectionné le long de la trajectoire de mouvement (32) déterminée depuis une position initiale vers une nouvelle seconde position ; et
la création (112) d'une nouvelle image (20) en combinant l'image de base (10F), le premier objet (14) repositionné et le second objet (14) repositionné.

2. Procédé (100) selon la revendication 1, **caractérisé en outre par** :
le rejet de la nouvelle position pour l'objet (14) sélectionné si la nouvelle position s'écarte de la trajectoire de mouvement (32) de plus d'un seuil d'écart prédéfini.

3. Procédé (100) selon l'une quelconque des revendications 1-2, **caractérisé en outre par** :
le fait de faire varier une dimension de l'objet sélectionné pendant que l'objet sélectionné est glissé le long de la trajectoire de mouvement déterminée.

4. Procédé (100) selon l'une quelconque des revendications 1-3, **caractérisé en outre par** :
si un mouvement de l'objet (14) sélectionné entre une première position dans une première image de la séquence d'images (10A-10F) et une seconde position dans une seconde image consécutive de la séquence d'images (10A-10F) dépasse un seuil différentiel :
la réalisation d'une interpolation pour déterminer une position supplémentaire pour l'objet (14) sélectionné le long de la trajectoire de mouvement (32) qui est entre les première et seconde positions ; et
l'affichage de l'objet (14) sélectionné au niveau de la position supplémentaire pendant que l'objet (14) sélectionné est glissé le long de la trajectoire de mouvement (32) déterminée entre les première et seconde positions.

5. Procédé (100) selon l'une quelconque des revendications 1-4, **caractérisé en outre par** :
l'affichage d'une indication de la trajectoire complète de l'objet (14) sélectionné pendant que l'objet (14) sélectionné est à un point donné sur la trajectoire et que l'entrée d'utilisateur qui fait glisser l'objet (14) est reçue.

6. Procédé (100) selon l'une quelconque des revendications 1-5, **caractérisé en outre par** :
l'identification de zones d'image qui ne sont pas occupées par l'objet (14) sélectionné dans l'une quelconque des images dans la séquence ; et
l'affichage des zones d'image identifiées de l'image de base (10F) tandis que l'objet (14) sélectionné est glissé le long de la trajectoire de mouvement (32).

7. Procédé (100) selon l'une quelconque des revendications 1-6, dans lequel la création d'une nouvelle image (20) en combinant l'image de base (10F) et les premier et second objets (14) repositionnés est **caractérisée par** :
la détermination de pixels dans l'image de base (10F) qui ne sont plus occupés lorsque l'objet (14) sélectionné est repositionné vers la nouvelle première ou seconde position ; et
le remplissage des pixels déterminés de l'image de base (10F) sur la base d'une zone d'image entourant les pixels déterminés, sur la base d'une ou plusieurs des images (10A-10F) depuis la séquence autres que l'image de base (10F), ou les deux.

8. Procédé (100) selon l'une quelconque des revendications 1-7, **caractérisé en outre par** l'enregistrement de la séquence d'images (10A-10F) sur la base d'un actionnement par un utilisateur d'un obturateur de caméra.

9. Procédé (100) selon l'une quelconque des revendications 1-8, dans lequel la séquence d'images (10A-10F) sont des trames d'une vidéo, et dans lequel des trames supplémentaires de la vidéo sont produites au moyen d'une technique d'interpolation.

10. Procédé (100) selon l'une quelconque des revendications 1-8, dans lequel la séquence d'images (10A-10F) fait référence à une séquence de photographies fixes, et dans lequel des images séquentielles supplémentaires sont produites au moyen d'une technique d'interpolation.

11. Procédé (100, 200) selon l'une quelconque des revendications 1-9, **caractérisé en outre par** :
la réception d'une entrée d'utilisateur (202) qui sélectionne un objet (14) supplémentaire depuis la séquence d'images (10A-10F) ;
l'exécution (204) d'un algorithme de traitement de mouvement vidéo basé sur des phases pour déterminer des mouvements exagérés de l'objet supplémentaire (40) ;
l'affichage des mouvements exagérés de l'objet supplémentaire (40) sur le dispositif d'affichage électronique (304) ;
sur la base de l'affichage des mouvements exagérés, la réception d'une représentation sélectionnée d'un mouvement exagéré de l'objet supplémentaire (40) ; et
le fait d'inclure la représentation sélectionnée de l'objet supplémentaire (40) dans la nouvelle image (20').

12. Dispositif informatique (300), comprenant :
un dispositif d'affichage électronique (304) ; et
un ou plusieurs circuits de traitement (302) configurés pour :
afficher, sur le dispositif d'affichage électronique (304), des images depuis une séquence d'images (10A-10F) qui dépeint une scène ;
recevoir une entrée d'utilisateur qui sélectionne une image (10A-10F) depuis la séquence (10A-10F) devant être utilisée en tant qu'image de base (10F) ;
recevoir une entrée d'utilisateur qui sélectionne un objet (14) depuis la séquence d'images (10A-10F) ;
déterminer une trajectoire de mouvement (32) de l'objet (14) sélectionné depuis la séquence d'images (10A-10F) ; et
effectuer un premier repositionnement de l'objet (14) sélectionné sur la base d'une entrée d'utilisateur qui fait glisser l'objet (14) sélectionné le long de la trajectoire de mouvement (32) déterminée depuis une position initiale vers une nouvelle première position ; **caractérisé en ce que**
le un ou plusieurs circuits de traitement (302) sont en outre configurés pour :
effectuer un second repositionnement de l'objet (14) sélectionné sur la base d'une entrée d'utilisateur qui fait glisser l'objet (14) sélectionné le long de la trajectoire de mouvement (32) déterminée depuis une position initiale vers une nouvelle seconde position ; et
créer une nouvelle image (20) en combinant l'image de base (10F), le premier objet (14) repositionné et le second objet (14) repositionné.

13. Dispositif informatique (300) selon la revendication 12, dans lequel le un ou plusieurs circuits de traitement (302) sont en outre configurés pour :
rejeter la nouvelle position pour l'objet (14) sélectionné si la nouvelle position s'écarte de la trajectoire de mouvement (32) de plus d'un seuil d'écart prédéfini, et
faire varier une dimension de l'objet (14) sélectionné pendant que l'objet (14) sélectionné est glissé le long de la trajectoire de mouvement (32) déterminée.

14. Dispositif informatique (300) selon l'une quelconque des revendications 12-13, dans lequel le un ou plusieurs circuits de traitement (302) sont en outre configurés pour :
si un mouvement de l'objet (14) sélectionné entre une première position dans une première image de la séquence d'images (10A-10F) et une seconde position dans une seconde image consécutive de la séquence d'images (10A-10F) dépasse un seuil différentiel :
réaliser une interpolation pour déterminer une position supplémentaire pour l'objet (14) sélectionné le long de la trajectoire de mouvement (32) qui est entre les première et seconde positions ; et
afficher l'objet (14) sélectionné au niveau de la position supplémentaire pendant que l'objet (14) sélectionné est glissé le long de la trajectoire de mouvement (32) déterminée entre les première et seconde positions.

15. Dispositif informatique (300) selon l'une quelconque des revendications 12-14, dans lequel le un ou plusieurs circuits de traitement (302) sont en outre configurés pour :
afficher une indication de la trajectoire complète de l'objet (14) sélectionné pendant que l'objet (14) sélectionné est à un point donné sur la trajectoire et que l'entrée d'utilisateur qui fait glisser l'objet (14) est reçue.
